# EUROPÄISCHE PATENTSCHRIFT

(11) **EP 2 282 955 B1**
(45) Veröffentlichungstag und Bekanntmachung des Hinweises auf die Patenterteilung: **27.11.2013**
(21) Anmeldenummer: 09727770.1
(22) Anmeldetag: 26.05.2009
(51) Int. Cl.: B65G 1/137

(54) **KOMMISSIONIERANLAGE ZUM KOMMISSIONIEREN VON ARTIKELN IN AUFTRAGSBEHÄLTER**
ORDER-PICKING SYSTEM FOR ORDER-PICKING ARTICLES INTO ORDER CONTAINERS
INSTALLATION DE PRÉPARATION DE COMMANDES POUR PLACEMENT D'ARTICLES DANS DES RÉCIPIENTS DE PRÉPARATION DE COMMANDES

(43) Veröffentlichungstag der Anmeldung: 16.02.2011
(73) Patentinhaber: Salomon Automation GmbH, 8114 Friesach (AT)
(72) Erfinder: GRUBER, Michael, A-8114 Friesach (AT); BAUER-KIESLINGER, Franz, A-8114 Friesach (AT); SPRINGSTUBBE, Oliver, A-8114 Friesach (AT)
(74) Vertreter: Schweinzer, Friedrich
(86) Internationale Anmeldenummer: PCT/AT2009/000218
(87) Internationale Veröffentlichungsnummer: WO 2009/121090

(56) Entgegenhaltungen:
- WO-A-96/36547
- WO-A-2006/042347
- AT-A4- 501 896
- DE-A1-102004 014 378

## Beschreibung

Die Erfindung betrifft eine Kommissionieranlage zum Kommissionieren von Artikeln in Auftragsbehälter, mit einem Kommissionierplatz und einem Sorter nach den Oberbegriff des Anspruchs 1. Es sind hier Anlagenbekannt, bei denen an einem Kommissionierarbeitsplatz entsprechend vorgegebenen Aufträgen ein oder mehrere unterschiedliche Artikel von einem Kommissionierer in Kommissionierschächte gegeben werden, die anschließend in Auftragsbehälter geführt werden. So zeigt z.B. die DE 10 2004 014 378 A1 ein derartiges System nach den Oberbegriff des Anspruchs 1. Andere Systeme nutzen den Sorter, um mehrere Artikel hintereinander in denselben Auftragsbehälter (auch Zielbehälter genannt) zu geben. So ein System wird auch als inverse Sortierung bezeichnet und ist z.B. in der AT 502982 A1 gezeigt. Bei der inversen Sortierung wird im Gegensatz zu anderen üblichen Kommissionierverfahren, jeder Artikel einzeln und sortenrein kommissioniert. Mit der Lösung nach AT 502982A1 kann allerdings nur eine geringe Zahl von Zielen bzw. Aufträgen gleichzeitig abgearbeitet werden. Selbst wenn am Sorter 100 oder 200 Auftrags- oder Zielbehälter vorgesehen sind, ist diese Zahl durch die Konstruktion der Kommissionieranlage begrenzt. Damit ist aber auch die Gesamtleistung des Systems begrenzt. Dies kann nur durch einen erhöhten Investitionsaufwand zur Schaffung von ausreichen Sortierendstellen für die erforderliche Anzahl von Auftragsbehältern verbessert werden.

Ziel der vorliegenden Erfindung ist es daher eine Anlage und ein Verfahren zu schaffen, bei der es möglich ist die Artikel auf mehr Ziele (d.h. Auftragsbehälter) als Endstellen des Sorters zu verteilen um dadurch eine wirtschaftliche Automatisierung einer inversen Kommissionierung zu ermöglichen.

Die Aufgabe wird mit der Kommissionieranlage gemäß Anspruch 1 und mit dem Verfahren zur Kommissionierung von Artikeln gemäß Anspruch 8 gelöst. Durch diese Anordnung kann die Kommissionierleistung wesentlich erhöht werden.

Werden die Auftragsbehälter an den Sammelstellen vorbeigeführt, so können in einfacher Weise wesentlich mehr Auftragsbehälter als Sorterendstellen vorgesehen werden.

Die Sammelstelle kann dabei als Schacht mit einer Klappe, als Rutsche mit Abgabefunktion oder beispielsweise als Fördereinrichtung ausgeführt sein. Je nach Sortiergut (Artikelart) kann hier die geeignete Anordnung getroffen werden. Grundsätzlich könnten auch alle unterschiedliche Arten von Sammelstellen vorgesehen sein, so dass ein gemischtes Artikelsortiment vorteilhaft auf die Aufträge aufgeteilt werden kann.

Eine vorteilhafte Ausgestaltung der Erfindung ist dadurch gekennzeichnet, dass die Auftragsbehälter über einen Rollenförderer geführt werden. Damit kann besonders günstig der jeweilige Auftragsbehälter unter den Sammelstellen entlanggeführt werden, wodurch eine günstige Beladung erreicht werden kann.

Wird zur Zufuhr der Artikel auf den Sorter mindestens ein Einschussband vorgesehen, so kann die Kommissionierleistung noch gesteigert werden, wobei natürlich auch weitere Einschussbänder vorgesehen sein können.

Werden die Auftragsbehälter an den Sammelstellen vorbeigeführt, so können in einfacher Weise wesentlich mehr Auftragsbehälter als Sorterendstellen vorgesehen werden.

Die Erfindung wird nun anhand der Zeichnungen beispielhaft beschrieben, wobei
Fig. 1 eine Draufsicht auf eine erfindungsgemäße Kommissionieranlage,
Fig. 2 eine Seitenansicht,
Fig. 3 eine 3D Ansicht einer erfindungsgemäßen Kommissionieranlage und
Fig. 4 einen Ausschnitt aus Fig. 3 darstellt.

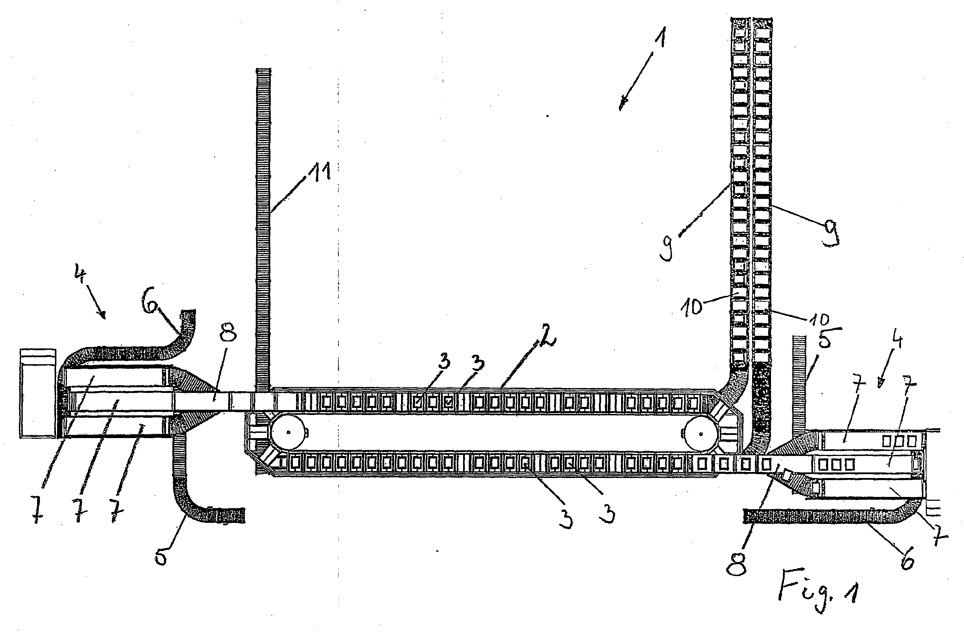

Fig. 1 zeigt den Grundriss einer erfindungsgemäßen Kommissionieranlage 1 mit einem Sorter 2, der eine Anzahl Sortertrays 3 aufweist. Die dargestellte Anlage weist zwei Kommissionierplätze 4 auf. Hier werden die Artikel über Fördermittel 5 dem Kommissionierplatz 4 zugeführt und leere bzw. teilentleerte Behälter über Fördermittel 6 abgeführt. Die Artikel werden von einem Kommissionierer auf Fördermittel, beispielsweise Förderbänder 7 aufgelegt und einem sogenannten Einschussband 8 zugeführt, das die Artikel gezielt auf die einzelnen Sortertrays 3 aufbringt. Die Bedarfe der für die derzeit kommissionierten Artikel relevanten Aufträge für die einzelnen Ziele und damit Auftragsbehälter 10 werden zusammengefasst. Dies ermöglicht dem Kommissionierer einzelne Artikel in höheren Stückzahlen auf den Sorter 2 bzw. das entsprechende Förderband 7 aufzulegen. Sofern die Zuführung der Zielbehälter mit den zu kommissionierenden Artikeln im Pulk erfolgt, kann jeweils der gesamte Bedarf für die relevanten Artikel dieses Pulks auf einmal aufgelegt werden. Besonders gut eignen sich hierfür Bekleidungsstücke, die sich in der Größe und gegebenenfalls Farbe unterscheiden, wobei für jeden Auftrag mehrere gleichartige derartige Artikel benötigt werden. Auch für die Verteilung bei anderen Artikeln, bei denen für einen Auftrag mehrere ähnliche Artikel zusammengestellt werden müssen, ist das erfindungsgemäße Verfahren vorteilhaft anwendbar. Über Fördermittel 9, welche als Rollenförderer, Gurtförderer o.ä. ausgeführt sein können, werden Auftragsbehälter (Zielbehälter) 10 dem Sorter 2 zugeführt und die befüllten Auftragsbehälter 10 über Fördermittel 11 abgeführt, von wo sie entsprechend verladen werden können.

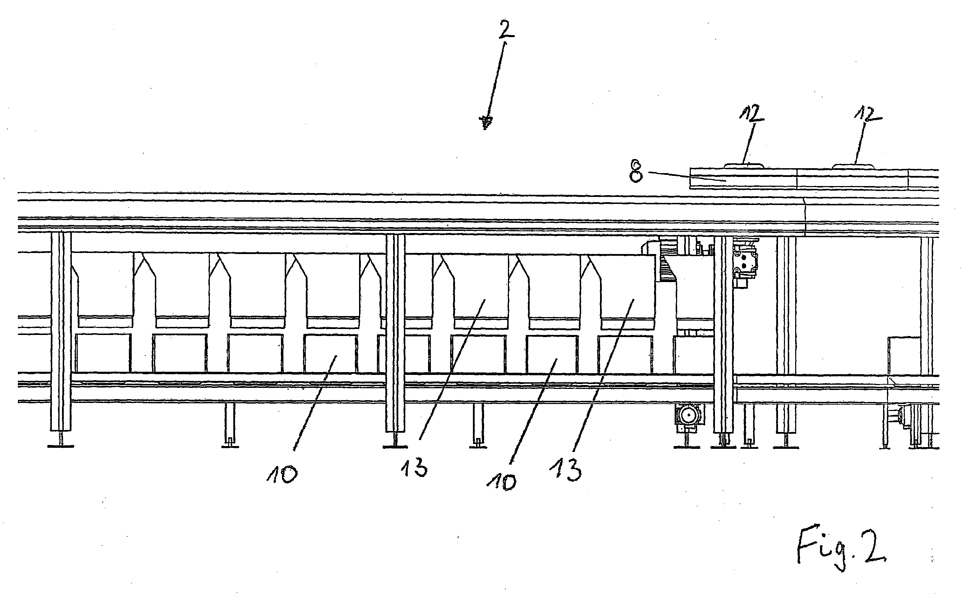

Fig. 2 zeigt eine Seitenansicht eines Sorters 2 mit dem Einschussband 8, auf dem mehrere Artikel 12 gelagert sind. Diese Artikel 12 werden mittels Sortertrays (hier nicht sichtbar) den einzelnen Sammelstellen 13 zugeführt. Diese Sammelstelle 13 ist hier als Schacht mit Klappe dargestellt. Es kann aber auch jede andere geeignete Vorrichtung wie z.B. eine Rutsche mit Abgabefunktion oder eine Fördereinrichtung sein. Die Sammelstelle 13 dient als kurzfristiger Puffer, der es ermöglicht den Sorter 2 mit den zulaufenden Auftragsbehältern 10 zu synchronisieren. Eine Sammelstelle 13 puffert immer den Bedarf aller derzeit kommissionierten Artikel 12 für den zulaufenden zugeordneten Zielbehälter 10.

Bei größeren Aufträgen können auch mehrere Auftragsbehälter 10 verwendet werden, wobei diese die Artikel aus jeweils einer eigenen zugeordneten Sammelstelle 13 entnehmen. Sorter 2 und Zuführband 7 bzw. Einschussband 8 werden so gesteuert, dass für einen zulaufenden Auftragsbehälter 10 vorgesehene Artikel 12 bereits in die Sammelstelle 13 abgeworfen werden, bevor der Auftragsbehälter 10 die Sammelstelle 13 erreicht.

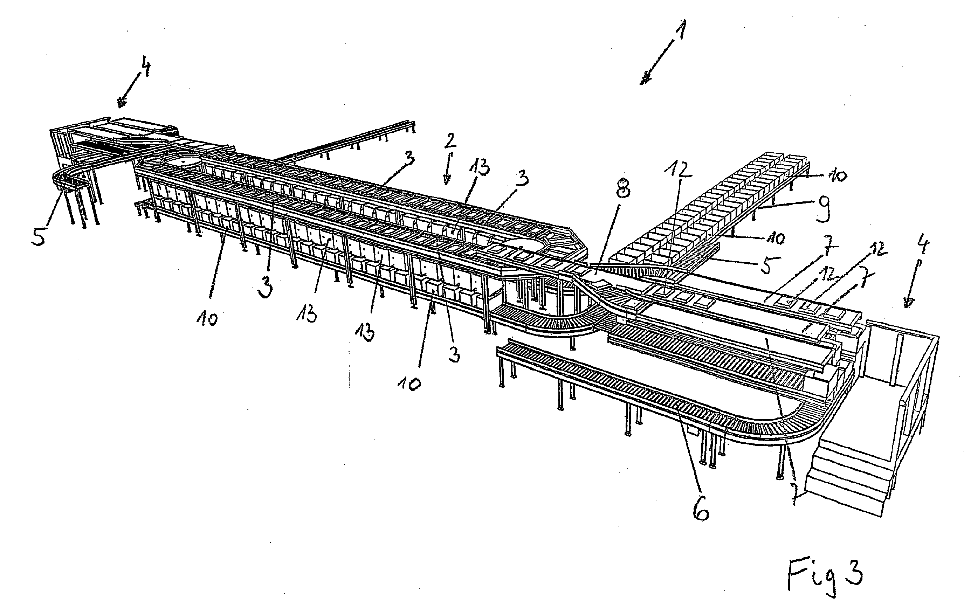

Fig. 3 zeigt eine 3D-Darstellung der erfindungsgemäßen Kommissionieranlage 2 mit Sorter 3 sowie zwei Kommissionierplätzen 4, die jeweils drei Förderbänder 7 zum Auflegen von Artikeln 12 aufweisen, wobei die Artikel 12 einem Einschussband 8 zugeführt werden, das die Artikel 12 auf die einzelnen Sortertrays 3 ablädt. Sobald das Sortertray 3 über der richtigen Sammelstelle 13 ist, werden die auf dem Sortertray 3 befindlichen Artikel 12 in die Sammelstelle 13 abgeworfen.

Es können auch mehrere Sortertrays 3 in dieselbe Sammelstelle 13 abladen, so dass mehrere auch unterschiedliche Artikel 12 in einer Sammelstelle 13 gepuffert werden. Wie aus Fig. 3 ersichtlich können die einzelnen Artikel 12 unabhängig davon welcher Kommissionierer diese aufgelegt hat, in die richtigen Sammelstellen 13 abgeworfen werden, da der Sorter einen in sich geschlossenen Kreis bildet und jeder Sortertray 3 über jeder Sammelstelle 13 vorbeigeführt wird.

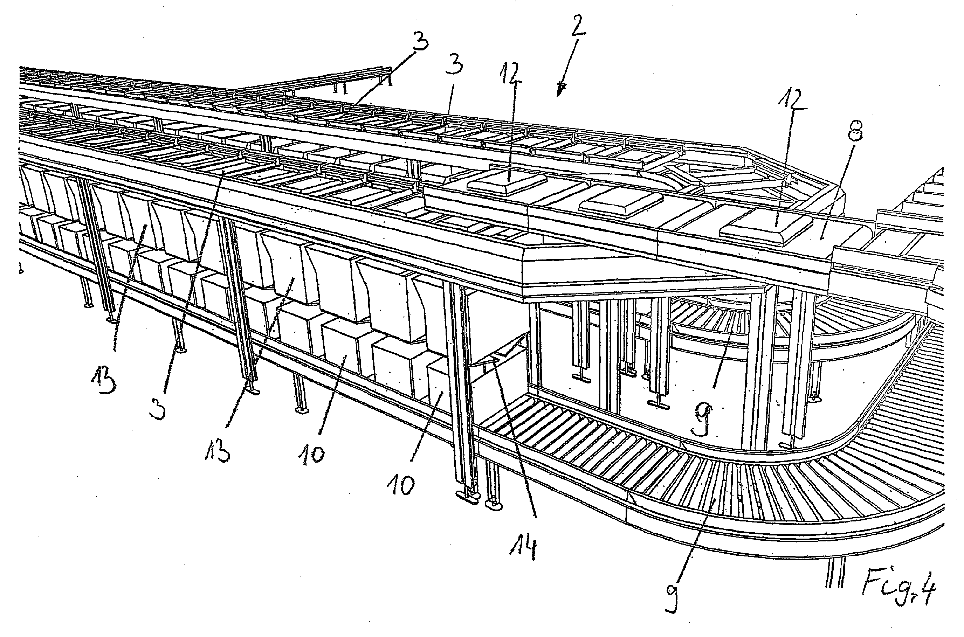

Fig. 4 zeigt einen Ausschnitt aus Fig. 3. Hier kann man besonders gut den Sorter 2 mit den einzelnen Sortertrays 3 erkennen, die die Artikel 12 in die Sammelstellen 13 abgeben. Weiters ist hier erkennbar, dass die Sammelstellen 13 Klappen 14 aufweisen, die geöffnet werden, sobald der zugeordnete Auftragsbehälter (Zielbehälter) 10 unterhalb vorbeigeführt wird.

Da immer wieder neue Auftragsbehälter 10 vorbeigeführt werden, sind die Aufträge nicht wie bei üblichen Kommissionieranlagen auf eine feste Zahl von Aufträgen apparatlich begrenzt. Damit kann eine besonders wirtschaftliche inverse Kommissionierung erreicht werden.

Die Erfindung ist nicht auf die dargestellten Ausführungsformen begrenzt. So kann, wie bereits beschrieben, die Sammelstelle auch als Rutsche oder Fördereinrichtung oder anderer Vorrichtung, die dieselbe Funktion erfüllt, ausgeführt werden. Der Sorter kann beispielsweise auch als sogennanter Splittray Sorter oder mit einem Quergurt ausgeführt sein, um z.B. auch leicht zu beschädigende Ware verteilen zu können.

## Patentansprüche

1. Kommissionieranlage zum Kommissionieren von Artikeln in Auftragsbehälter, mit einem Kommissionierplatz (4) und einem Sorter (2), wobei zwischen Sorter (2) und Auftragsbehälter (10) eine Anzahl von Sammelstellen (13) angeordnet ist, wobei der Sorter (2) Sortertrays (3) aufweist, die kontinuierlich am Kommissionierplatz (4) vorbeigeführt werden und die Sortertrays (3) kontinuierlich an den einzelnen Sammelstellen (13) vorbeigeführt werden, **dadurch gekennzeichnet, dass** der Sorter (2) einen in sich geschlossenen Kreis bildet und jeder Sortertray (3) über jeder Sammelstelle (13) vorbeigeführt wird.

2. Kommissionieranlage nach Anspruch 1, **dadurch gekennzeichnet, dass** die Auftragsbehälter (10) an den Sammelstellen (13) vorbeigeführt werden.

3. Kommissionieranlage nach Anspruch 1 oder 2, **dadurch gekennzeichnet, dass** die Sammelstelle (13) als Schacht mit einer Klappe ausgeführt ist.

4. Kommissionieranlage nach Anspruch 1 oder 2, **dadurch gekennzeichnet, dass** die Sammelstelle (13) als Rutsche mit Abgabefunktion ausgeführt ist.

5. Kommissionieranlage nach Anspruch 1 oder 2, **dadurch gekennzeichnet, dass** die Sammelstelle (13) als Fördereinrichtung ausgeführt ist.

6. Kommissionieranlage nach Anspruch 2, **dadurch gekennzeichnet, dass** die Auftragsbehälter (10) über ein Fördermittel (9) geführt werden.

7. Kommissionieranlage nach einem der Ansprüche 1 bis 6, **dadurch gekennzeichnet, dass** zur Zufuhr der Artikel (12) auf den Sorter (2) mindestens ein Einschussband (8) vorgesehen ist.

8. Verfahren zur Kommissionierung von Artikeln in Auftragsbehälter, wobei ein die Artikel (12) von einem Kommissionierplatz (4) einem Sorter (2) zugeführt werden, wobei die Artikel zwischen Sorter (2) und Auftragsbehälter (10) in einer Sammelstelle (13) zwischengespeichert werden, wobei der Sorter (2) Sortertrays (3) aufweist, die kontinuierlich am Kommissionierplatz (4) vorbeigeführt werden und die Sortertrays (3) kontinuierlich an den einzelnen Sammelstellen (13) vorbeigeführt werden, **dadurch gekennzeichnet, dass** der Sorter (2) einen in sich geschlossenen Kreis bildet und jeder Sortertray (3) über jeder Sammelstelle (13) vorbeigeführt wird.

9. Verfahren nach Anspruch 8, **dadurch gekennzeichnet, dass** die Auftragsbehälter (10) an den Sammelstellen (13) vorbeigeführt werden.

## Claims

1. Order picking system for commissioning articles in order containers, including a commissioning station (4) and a sorter (2), where a number of accumulation bins (13) are arranged between sorter (2) and order containers (10), where the sorter (2) features sorter trays (3) which are continuously carried past the commissioning station (4) and the individual accumulation bins (13), **characterised by** the sorter (2) forming a self-contained circle and each sorter tray (3) being passed over each accumulation bin (13).

2. Order picking system according to claim 1, **characterised by** the order containers (10) being carried past the accumulation bins (13).

3. Order picking system according to claim 1 or 2, **characterised by** the accumulation bin (13) being designed as a shaft closed by a hatch.

4. Order picking system according to claim 1 or 2, **characterised by** the accumulation bin (13) being designed as a chute with output function.

5. Order picking system according to claim 1 or 2, **characterised by** the accumulation bin (13) being designed as a conveying means (9).

6. Order picking system according to claim 2, **characterised by** the order containers (10) being transported on a conveying means (9).

7. Order picking system according to claims 1 to 6, **characterised by** at least one picker belt (8) designated for transporting the articles (12) onto the sorter (2).

8. Method for the commissioning of articles in order containers, where the articles (12) are transported from a commissioning station (4) to a sorter (2), where the articles are intermediately stored in an accumulation bin (13) between sorter (2) and order containers (10), where the sorter (2) has sorter trays (3) which are continuously carried past the individual accumulation bins (13), **characterised by** the sorter (2) forming a self-contained circle and each sorter tray (3) being passed over each accumulation bin (13).

9. Method according to claim 8, **characterised by** the order containers (10) being carried past the accumulation bins (13).

## Revendications

1. Système commande à commander des articles en récipients de commande, contenir un station à commande (4) et un sorter (2), où un nombre de basins collecteurs (13) sont arrangés entre sorter (2) et récipients de commande (10), où le sorter (2) avait des sorter plateaux (3) qui passe continue par le station à commande (4) et les basins collecteurs individuels (13), **caractérisé par** le sorter (2) forment un cercle fermé et chacun sorter plateau (3) est passé à travers chacun basin collecteur (13).

2. Système commande selon la revendication 1, **caractérisé par** les récipients de commande (10) transportés par les basins collecteur (13).

3. Système commande selon l'une des revendications 1 où 2, **caractérisé par** le basin collecteur (13) être arranger comme une buse fermée par une valve.

4. Système commande selon l'une des revendications 1 où 2, **caractérisé par** le basin collecteur (13) être arranger comme un glissoir avec une fonction transmettre.

5. Système commande selon l'une des revendications 1 où 2, **caractérisé par** le basin collecteur (13) être arranger comme un transporteur (9).

6. Système commande selon revendication 2, **caractérisé par** les récipients de commande (10) être transporter sur un transporteur (9).

7. Système commande selon l'une des revendications 1 à 6, **caractérisé par** au moins une bande d'amenée (8) dédié à transporter les articles (12) vers le sorter (2).

8. Procédé à commande des articles dans des récipients de commande, les articles (12) étant transporter d'une station à commande (4) à un sorter (2), où les articles sont accumulés à l'instant dans un basin collecteur (13) entre sorter (2) et récipient de commande (10), où le sorter (2) comporte des sorter plateaux (3) qui sont transportés continues par les basin collecteur individuels (13), **caractérisé par** le sorter (2) forment un cercle fermé et chacun sorter plateau (3) être transporter par chacun basin collecteur (13).

9. Procédé selon revendication 8, **caractérisé par** les récipients commande (10) être transporter par les basins collecteur (13).
